# EUROPEAN PATENT SPECIFICATION

(11) **EP 2 533 123 B1**
(45) Date of publication and mention of the grant of the patent: **28.12.2016**
(21) Application number: 11400033.4
(22) Date of filing: 09.06.2011
(51) Int. Cl.: G05D 1/10

(54) **Navigation system for an aircraft and method of operating such a navigation system**
Navigationssystem für ein Flugzeug und Verfahren zum Betreiben solch eines Navigationssystems
Système de navigation pour un avion et procédé d'exploitation d'un tel système de navigation

(43) Date of publication of application: 12.12.2012
(73) Proprietor: AIRBUS HELICOPTERS DEUTSCHLAND GmbH, 86609 Donauwörth (DE)
(72) Inventor: Verlut, Grégoire, 81735 Munich (DE)
(74) Representative: Pouillot, Laurent Pierre Paul

(56) References cited:
- US-A1- 2004 148 100
- US-A1- 2005 273 248
- US-A1- 2009 281 684

## Description

The invention relates to a navigation system for a helicopter allowing computation of guidance and to a method of operating such a navigation system.

Emergency medical services operators in helicopters often fly in conditions near to the instrument meteorological condition standards. Thus said operators run a high risk of entering clouds while for most of said operators exclusively visual flights are allowed. When entering into clouds, said operators loose visual reference so that flight into terrain may happen very fast.

The document US2004148100 describes a method and system dedicated to road vehicles. In fact, this document is directed to backing a big vehicle in darkness, when visibility is low, driving on a narrow road or at a complicated location. A Driving Route Recording-Move System takes parameter data like the steering wheel rotation angle, moving speed and direction in real time, processes the data and saves them in a file if needed or updates the data. The recording time for the parameter data can be adjusted based on various needs. When the vehicle needs to be backed up, the previously stored data in memory or saved in a file can then be recalled and processed by a control device of the system, to rotate the steering wheel in a desired direction to a desired angle thus causing the vehicle to back up while following, except in a reverse direction, the same route through which the vehicle came in earlier.

The document US2009281684 discloses a flight guidance and navigation display for a helicopter, including a three-dimensional, semicircular flight guidance and navigation tunnel to display a planned flight path of the helicopter. A circular surface is integrated in the flight guidance and navigation tunnel, which circular surface includes a diameter that corresponds to that of the flight guidance and navigation tunnel, for displaying a longitudinal position within the flight guidance and navigation tunnel; a flight path prediction icon for displaying a position of the helicopter relative to the flight guidance and navigation tunnel and a command signal that relates to the air speed, wherein via the command signal a deviation from a reference speed that has been predetermined by flight planning is displayed. Said flight guidance and navigation is no help to avoid terrain, if the planned flight plan is not free from obstacles.

The document US20050273248 discloses a method and device for securing a low altitude flight of a flight vehicle, which involves recording a part of a lateral path of a low level flight path located in front of a present position of an aircraft, during the low level flight. The availability of the lateral path is monitored during the low level flight. Said state of the art is directed to avoid obstacles by taking the aircraft upwards. In case of high clouds that is no remedy for operators exclusively entitled to visual flights.

The object of the invention is to provide a navigation system for an helicopter allowing improvement of the safety of the helicopter and of its crew and a method of operating such a navigation system.

The solution is provided with a navigation system having the features of claim 1 and with a method having the features of claim 10. Embodiments are disclosed in the subclaims.

According to an embodiment an on board navigation system for a helicopter, comprises on board means for real time detection of data related to at least parts of a path flown by the aircraft after take-off. On board real time storing means store said data and on board computing means of guidance creates a reversion of said flown path, said reversion being derived from said data of at least parts of the flight path. On board depicting means are provided to depict this guidance and on board means such as a switch may be actuated to fly this reverted flight path with preferably at least some support from an on board automatic flight and control system. The inventive navigation system allows a pilot to fly an aircraft by relying on data detected and stored during the aircrafts antecedent trajectory thus relying on data representing a flight path proven to be safe and improving the safety of the aircraft and its crew. When in danger, e. g. after accidentally entering into clouds and loosing sight, the pilot/crew activate the inventive navigation system by using a "red alarm" switch and the inventive navigation system extracts the antecedent flight path known to be safe: from the last take-off until the actuation of the inventive navigation system to provide to the pilot/crew means to fly safely back to the heliport or to a safe point. The antecedent trajectory is reversed: a climb phase becomes a descent phase, an acceleration a deceleration, and so on for all the flight parameters stored previously. By using the on board automatic flight and control system, it can be ensured that the helicopter will not collide with the terrain. For instance the inventive navigation system will check that the turn radii of the helicopter are compatible with the velocity provided and that the helicopter will not slip outside the turn. The inventive navigation system is suitable for all helicopters with a glass cockpit and preferably for helicopters with an automatic flight and control system (AFCS)/head-up display.

According to a preferred embodiment of the invention on board computing means are provided. Said computing means assesses whether an acceptable integrity along the reverted flight path is provided or not with a terrain plus obstacle database. The integrity is computed by combining the data related to said flight path with data from said terrain plus obstacle database and gives an estimation of the maximal error between a metered value and the real value for a given standard deviation.

According to a further preferred embodiment of the invention means of monitoring are provided said means of monitoring being suitable to depict that the current integrity in the position is compliant with the integrity stored for the flight path or at least compliant with the acceptable computed integrity. Integrity parameters are monitored to be sure that the helicopter will not deviate too much from the flight plan. Global positioning system (GPS)/Satellite Based augmentation system (SBAS) coverage will provide the integrity needed for the positioning system.

According to a further preferred embodiment of the invention the on board means of storing the flight path is adapted to store the precise position of the helicopter, integrity of the position computation, attitude, velocities and/or remaining fuel, said parameters being stored preferably during normal flight with a certain amount of said parameters being continuously and regularly stored, without crew action, from take-off to a current position.

According to a further preferred embodiment of the invention these parameters comprise a precise timestamp such as Universal Time Coordinated (UTC) time with milliseconds precision, as delivered by a GPS sensor, an accurate horizontal position of the helicopter: latitude, longitude, altitude, particularly from GPS, Inertial Navigation System (INS), Digital Measuring Equipment (DME)/DME, VHF Omni-directional Radio-range (VOR)/DME as delivered by the GPS sensor or by the Flight Management System (FMS); ground speed, airspeed of the helicopter from using the air data computer and the FMS data, attitude of the helicopter: pitch, roll, yaw, pitch rate, roll rate, yaw rate, pitch acceleration, roll acceleration, yaw acceleration, body accelerations from using an accelerometer and/or gyrometer of the helicopter, integrity of the position, particularly horizontal integrity and vertical integrity, such as delivered by the GPS or by the FMS, and accurate situation of the helicopter, as weight, fuel on board, such as delivered by the Health Monitoring System (HMS) or by the FMS. The inventive combination of storing the precise flight path, of computing guidance along this reverted flight plan, depicting this guidance to the pilot and offering coupling capabilities allows improved safety for aircraft and pilot/crew.

According to a further preferred embodiment of the invention on board means of selecting an extract of the flight path for the guidance computation are provided and preferably said means of computing guidance comprise a cross deviation indicator, vertical deviation indicator, required speed, and tunnel in the sky indication and preferably use the displays already installed for depiction and/or head-up displays if provided. If no head-up displays are installed, which is the case for almost 100% of the EMS helicopters, the guidance symbol can still be depicted on the displays in front of the pilot.

According to a further preferred embodiment of the invention said onboard storage means have enough memory to store up to 4 hours and are adapted to helicopter environment.

According to a further preferred embodiment of the invention guidance is computed along the flight plan, to follow the flight plan depending on the current position of the helicopter. Guidance parameters are displayed to the pilot/crew using standard displays and cross-track indicator, vertical track indicator, speed indicator, vertical speed indicator, so that the pilot/crew get all the parameter to maintain the helicopter on the flight plan.

According to a further preferred embodiment of the invention the AFCS, is adapted to perform coupling to one or more axes and if the installed AFCS cannot provide full coupling such as for instance 3 axis AFCS, a partial coupling can be achieved and a visual clue will be still provided to the pilot, to manage the axis, not coupled to the AFCS. Tunnel in the sky can be also used to display the path to follow.

According to a embodiment of the invention a method of operating such a navigation system is provided with the following steps: Flying an helicopter, Detecting data related to the path flown, Storing said data in on board storage means, Retrieving said data from said on board storage means, Providing guidance data by reverting said data by means of computing means, Depicting said reverted data and Flying the helicopter along said reverted data by integrating at least partly the AFCS.

According to a further preferred embodiment of the invention said method comprises selection of an extract of said depicted and reverted data.

A preferred embodiment of the invention is shown with the following description and by reference to the attached drawings.

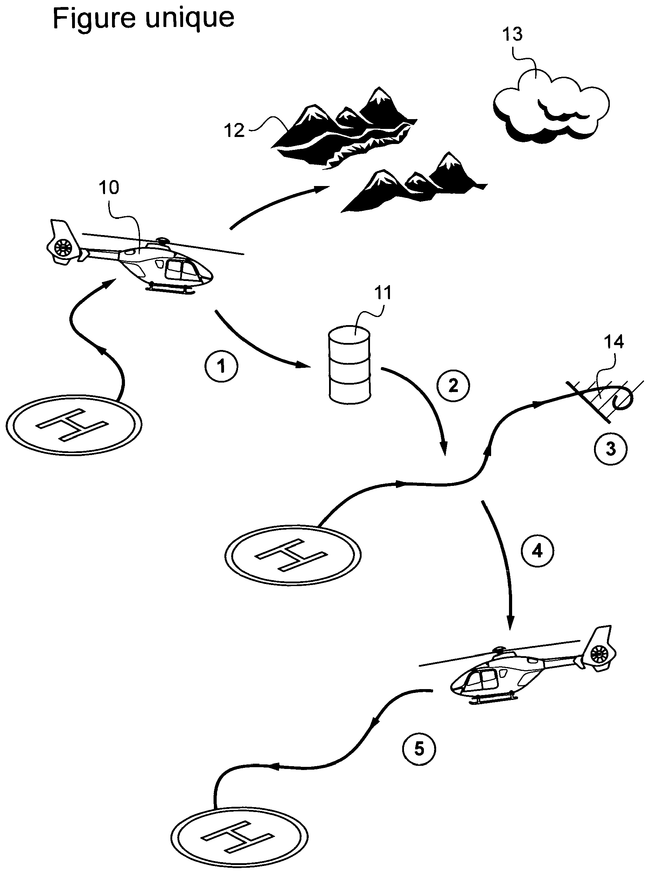

Fig. 1 shows a chart for a flight with on board navigation system according to the invention.

According to Fig. 1 a helicopter 10 with a navigation system takes-off from a heliport H to fly in a first phase 1 in visual meteorological condition (VMC), allowing the pilot/crew of the helicopter 10 to avoid obstacles and terrain at visual flight. The navigation system of the helicopter 10 comprises on board means for real time detection (not shown) of data related to the path flown by the helicopter 10. On board storing means 11 record continuously said data real time - like a breadcrumb trail - during a flight path taking said helicopter from the heliport H along obstacles 12, such as mountains.

The recorded data comprise the precise position of the helicopter 10, integrity of the position computation, attitude, velocities and/or remaining fuel, said parameters being stored during normal flight continuously and regularly without crew action, from take-off to a current position. The integrity of the position is for a given probability, the estimation of the distance between the measured position and the real position, said integrity of the helicopter 10 being not less than 99,99999%.

After the helicopter 10 has entered in a second flight phase into instrument meteorological condition (IMC), e.g. by entering into clouds 13, the pilot/crew actuate a switch (not shown), e.g. a "red alarm" to ask for guidance from on board computing means (not shown). The on board computing means prepare a reversion of the flight path derived from said data, recorded during the first phase 1 of the visual flight phase, said first phase 1 of the flight phase being safe by definition. By reversing the antecedent trajectory, i. e. a climb phase becomes a descent phase, an acceleration a deceleration, and so on for all the flight parameters stored previously, the on board computing means offers to the pilot/crew of the helicopter 10 the same way back as the safe antecedent trajectory.

On board depicting means (not shown) are provided to depict this computed guidance to the pilot/crew. On board means of selecting (not shown) an extract of the flight path for the guidance computation allow the pilot/crew in a third phase of the flight to remove a part 14 of the guidance related to the previous flight that has been passed to retrace the way in vain.

After selection of the extract of the flight path for the guidance computation on board flying means (not shown) take over to fly the helicopter 10 directly back to the start of the reversion and in a fourth phase along this reverted flight path. Guidance along the reverted flight path and display of the respective guidance parameters with any coupling of an automatic flight and control system are provided in a fifth phase back to the heliport H from where the helicopter 10 took off.

Method of operating the navigation system is operated with the following steps: flying the aircraft, detecting data related to the path flown, storing said data in on board storage means, retrieving said data from said on board storage means by switching, providing guidance data by reverting said data by means of computing means, depicting said reverted data and flying the aircraft back to the point of departure along said reverted data by integrating at least partly the AFCS.

The pilot/crew may select an extract of said depicted and reverted data before flying back along the reverted trajectory of the first phase of the flight path. The computation means will take the helicopter directly to the beginning of the reverted trajectory.

## Claims

1. An on board navigation system for a helicopter (10), comprising:
- on board means for real time detection of data related to at least parts of a path flown by the helicopter (10) after take-off,
- on board means of storing (11) said data in real time,
- on board automatic flight and control system; and
- at least one display installed on board for depiction of guidance from automatic flight and control system;
**characterized in that** the data related to the path flown in the automatic flight and control system of the helicopter (10) comprises accurate horizontal positions of the helicopter (10) including: latitudes, longitudes, altitudes; the on board navigation system for helicopter (10), further comprising:
- on board means of computing guidance along a reverted flown path derived from said data; said means computing deviation indicators to be used by the displays for depiction;
- means of computing an acceptable integrity along the reverted flown path that are provided with a terrain plus obstacle database;
- on board means of flying the reverted flown path; the means of flying the reverted flown path being at least partially coupled to the on board automatic flight and control system;
- the display including on board means of depicting the guidance with deviation indicators with computed acceptable integrity.

2. The navigation system according to claim 1,
**characterized in that** the means of flying the reverted flown path are fully coupled to the automatic flight and control system.

3. The navigation system according to claim 1,
**characterized in that** means of computing acceptable integrity along the reverted flown path combine the data related to said flown path with data from said terrain plus obstacle database.

4. The navigation system according to claim 1,
**characterized in that** the navigation system provides means of monitoring suitable to depict on the display that the current integrity in a position of the helicopter (10) is compliant with the integrity stored for the flight path or at least compliant with the acceptable computed integrity.

5. The navigation system according to claim 1,
**characterized in that** the navigation system provides on board means of storing (11) the flight path adapted to store parameters of the precise positions of the helicopter (10), among: integrity of the position computation, attitude, velocities and/or remaining fuel, said parameters being stored during normal flight in the path flown with a certain amount of said parameters being continuously and / or regularly stored, without crew action, from the take-off to a current position.

6. The navigation system according to claim 5,
**characterized in that** the parameters comprise
- a precise timestamp such as UTC time with milliseconds precision, as delivered by an on board GPS sensor,
- an accurate horizontal position of the helicopter (10): latitude, longitude, altitude, from GPS, INS, DME/DME, VOR/DME as delivered by the GPS sensor or by the FMS;
- ground speed, airspeed of the helicopter (10) from using the air data computer and the FMS data;
- attitude of the helicopter (10): pitch, roll, yaw, pitch rate, roll rate, yaw rate, pitch acceleration, roll acceleration, yaw acceleration, body accelerations from using an accelerometer and/or gyrometer of the helicopter (10);
- integrity of the position, particularly horizontal integrity and vertical integrity, such as delivered by the GPS or by the FMS, and
- accurate situation of the helicopter (10), as weight, fuel on board, such as delivered by the HMS or by the FMS.

7. The navigation system according to claim 1,
**characterized in that** the navigation system provides means of selecting an extract of the flown path for the guidance computation.

8. The navigation system according to claim 1,
**characterized in that** said means of computing guidance comprise a cross deviation indicator, vertical deviation indicator, required speed, and tunnel in the sky indication and use the displays already installed for depiction and/or head-up displays if provided.

9. The navigation system according to claim 1,
**characterized in that** said means used for storage (11) has enough memory to store up to 4 hours and is adapted to the helicopter environment.

10. A method of operating a navigation system of a helicopter (10) according to any one of claims 1-9, with the following steps: Flying the helicopter (10), Detecting data related to the path flown, said data comprising an accurate horizontal position of the helicopter: latitude, longitude, altitude,
Storing said data in on board storage means (11), Retrieving said data from said on board storage means (11), Providing guidance data by reverting said data by means of computing means, computing an acceptable integrity along the reverted flown path from a terrain plus obstacle database, Depicting said reverted data and Flying the helicopter (10) along said reverted data by integrating at least partly the AFCS when the helicopter (10) is in a flight phase in conditions near to instrument meteorological condition (IMC).

11. The method according to claim 10,
**characterized by** selecting an extract of said depicted and reverted data.

## Patentansprüche

1. Bordnavigationssystem für einen Hubschrauber (10) mit
- Bordmitteln zur Erfassung von Daten bezüglich mindestens Teilen einer von dem Hubschrauber (10) nach dem Start geflogenen Flugbahn in Echtzeit,
- Bordmitteln (11) zum Speichern dieser Daten in Echtzeit,
- einem automatischen bordeigenen Flug-
und -Steuerungssystem, und
- mindestens einer an Bord installierten Anzeige zur Darstellung der Führung durch das automatische Flug- und Steuerungssystem,
**dadurch gekennzeichnet, dass** die Daten in dem automatischen Flug- und Steuerungssystem des Hubschraubers (10) bezüglich der geflogenen Flugbahn genaue horizontale Positionen des Hubschraubers (10) enthalten, die umfassen: Breitengrade, Längengrade, Flughöhen, wobei das Bordnavigationssystem für den Hubschrauber (10) ferner aufweist:
- Bordmittel zum Berechnen der Führung entlang einer umgekehrten geflogenen Flugbahn, die aus den Daten abgeleitet wird, wobei die Mittel Abweichungsindikatoren berechnen, die von den Anzeigen zur Darstellung zu verwenden sind,
- Mittel zum Berechnen einer akzeptablen Informationsintegrität entlang der umgekehrten geflogenen Flugbahn, die von einer Gelände-plus-Hindernis-Datenbank geliefert werden,
- Bordmittel für das Fliegen der umgekehrten geflogenen Flugbahn, wobei die Mittel für das Fliegen der umgekehrten geflogenen Flugbahn mindestens teilweise mit dem automatischen Flug- und Steuerungssystem gekoppelt sind,
- wobei die Anzeige Bordmittel zur Darstellung der Führung mit Abweichungsindikatoren mit akzeptabler berechneter Informationsintegrität umfasst.

2. Navigationssystem nach Anspruch 1,
**dadurch gekennzeichnet, dass** die Mittel für das Fliegen der umgekehrten geflogenen Flugbahn vollständig mit dem automatischen Flug- und Steuerungssystem gekoppelt sind.

3. Navigationssystem nach Anspruch 1,
**dadurch gekennzeichnet, dass** die Mittel zum Berechnen einer akzeptablen Informationsintegrität entlang der umgekehrten geflogenen Flugbahn die Daten, die die geflogene Flugbahn betreffen, mit Daten von der Gelände-plus-Hindernis-Datenbank kombinieren.

4. Navigationssystem nach Anspruch 1,
**dadurch gekennzeichnet, dass** das Navigationssystem Kontrollmittel bereitstellt, die geeignet sind, auf der Anzeige darzustellen, dass die aktuelle Informationsintegrität an einer Position des Hubschraubers (10) konform mit der Informationsintegrität ist, die für die Flugbahn gespeichert ist, oder mindestens konform mit der akzeptablen berechneten Informationsintegrität ist.

5. Navigationssystem nach Anspruch 1,
**dadurch gekennzeichnet, dass** das Navigationssystem Bordmittel (11) bereitstellt zum Speichern der Flugbahn, die ausgestaltet sind, um Parameter der genauen Position des Hubschraubers (10) zu speichern, unter denen sich befinden: die Informationsintegrität der Positionsberechnung, die Flughöhe, Geschwindigkeiten und/oder restlicher Kraftstoff, wobei die Parameter während eines normalen Flugs auf der Flugbahn gespeichert werden, wobei eine bestimmte Menge dieser Parameter kontinuierlich und/oder regelmäßig ohne Zutun der Besatzung vom Start bis zu einer aktuellen Position gespeichert werden.

6. Navigationssystem nach Anspruch 5,
**dadurch gekennzeichnet, dass** die Parameter umfassen:
- einen präzisen Zeitstempel, wie einen Koordinierte-Weltzeit(UTC)-Stempel mit einer Millisekunden-Genauigkeit, wie er durch einen Bord-GPS-Sensor geliefert wird,
- eine genaue horizontale Position des Hubschraubers (10): Breitengrad, Längengrad, Flughöhe von Systemen wie GPS, INS, DME/DME, VOR/DME, wie sie von dem GPS-Sensor oder dem Flugkontrollsystem FMS geliefert werden,
- die Geschwindigkeit über Grund, die Fluggeschwindigkeit des Hubschraubers (10) unter Verwendung des Luftdaten-Computers und der FMS-Daten,
- das Verhalten des Hubschraubers (10): Nicken, Rollen um die Längsachse, Gierbewegung, Nickrate, Rate des Rollens um die Längsachse, Gierrate, Nickbeschleunigung, Beschleunigung des Rollens um die Längsachse, Gierbeschleunigung, Körperbeschleunigungen erhalten durch die Verwendung eines Beschleunigungsmessers und/oder eines Gyrometers des Hubschraubers (10),
- Informationsintegrität der Position, insbesondere horizontale Informationsintegrität und vertikale Informationsintegrität, wie sie von dem GPS oder dem FMS geliefert werden, und
- die genaue Situation des Hubschraubers (10), wie Gewicht, Kraftstoff an Bord, wie sie von dem HMS oder dem FMS geliefert wird.

7. Navigationssystem nach Anspruch 1,
**dadurch gekennzeichnet, dass** das Navigationssystem Mittel bereitstellt zur Auswahl eines Ausschnitts der geflogenen Flugbahn für die Führungsberechnung.

8. Navigationssystem nach Anspruch 1,
**dadurch gekennzeichnet, dass** die Mittel zur Berechnung der Führung einen Querabweichungsindikator, einen Vertikalabweichungs-Indikator, eine Anzeige der erforderlichen Geschwindigkeit und eine Tunnel-in-the-Sky-Anzeige aufweisen und die schon für die Darstellung installierten Anzeigen und/oder, falls vorhanden, Head-up-Displays verwenden.

9. Navigationssystem nach Anspruch 1,
**dadurch gekennzeichnet, dass** die Speichermittel (11) ausreichend Speicherkapazität aufweisen, um bis zu vier Stunden zu speichern und diese an das Hubschrauberumfeld angepasst sind.

10. Verfahren zum Betrieb eines Navigationssystems eines Hubschraubers (10) nach einem der Ansprüche 1 bis 9 mit den folgenden Schritten:
Fliegen des Hubschraubers (10), Erfassen von Daten bezüglich der geflogenen Flugbahn, wobei diese Daten eine genaue horizontale Position des Hubschraubers, den Breitengrad, den Längengrad und die Flughöhe umfassen,
Speichern der Daten in Bordspeichermitteln (11), Entnehmen der Daten aus den Bordspeichermitteln (11), Liefern von Führungsdaten durch Umkehren der Daten mit Hilfe von Rechenmitteln, Berechnen einer akzeptablen Informationsintegrität entlang der umgekehrten geflogenen Flugbahn aus einer Gelände-plus-Hindernis-Datenbank, Darstellen der umgekehrten Daten, und Fliegen des Hubschraubers (10) entlang der umgekehrten Daten durch zumindest teilweises Einbeziehen des AFCS, wenn der Hubschrauber (10) sich in einer Flugphase unter Bedingungen nahe Instrumentenwetterbedingungen (IMC) befindet.

11. Verfahren nach Anspruch 10,
**gekennzeichnet durch** Auswählen eines Auszugs der dargestellten und umgekehrten Daten.

## Revendications

1. Un système de navigation embarqué pour un hélicoptère (10) comprenant :
- des moyens embarqués de détection en temps réel de données relatives à au moins des parties d'une trajectoire suivie par l'hélicoptère (10) après le décollage,
- des moyens embarqués de stockage (11) desdites données en temps réel,
- un système de commande de vol automatique embarqué ; et
- au moins un affichage embarqué pour la présentation visuelle du guidage à partir du système de commande de vol automatique ;
**caractérisé en ce que** les données relatives à la trajectoire de vol dans le système de commande de vol automatique de l'hélicoptère (10) comprennent des positions horizontales précises de l'hélicoptère (10) comportant les: latitudes, longitudes, altitudes ; le système de navigation embarqué de l'hélicoptère (10) comprenant en outre :
- des moyens embarqués de calcul de guidage suivant une trajectoire de vol de retour qui est dérivée desdites données ; lesdits moyens calculant les indicateurs de déviation à utiliser par les affichages pour la présentation visuelle;
- des moyens de calcul d'une intégrité acceptable suivant la trajectoire de vol de retour, pourvus d'une base de données de terrain et d'obstacles ;
- des moyens embarqués de vol selon la trajectoire de vol de retour; les moyens de vol selon la trajectoire de vol de retour étant au moins partiellement couplés au système de commande de vol automatique embarqué ;
- l'affichage incluant des moyens embarqués de présentation visuelle du guidage avec des indicateurs de déviation avec une intégrité calculée acceptable.

2. Le système de navigation selon la revendication 1,
**caractérisé en ce que** les moyens de vol suivant la trajectoire de vol de retour sont totalement couplés au système de commande de vol automatique.

3. Le système de navigation selon la revendication 1,
**caractérisé en ce que** les moyens de calcul de l'intégrité acceptable suivant la trajectoire de vol de retour combinent des données relatives à ladite trajectoire de vol avec des données de ladite base de données de terrain et d'obstacles.

4. Le système de navigation selon la revendication 1,
**caractérisé en ce que** le système de navigation prévoit des moyens de surveillance adéquats pour visualiser sur l'affichage que l'intégrité courante dans une position de l'hélicoptère (10) est conforme à l'intégrité stockée pour la trajectoire de vol ou au moins conforme avec l'intégrité calculée acceptable.

5. Le système de navigation selon la revendication 1,
**caractérisé en ce que** le système de navigation prévoit des moyens embarqués de stockage (11) de la trajectoire de vol adaptés au stockage des paramètres des positions précises de l'hélicoptère (10), parmis : l'intégrité du calcul de position, assiette, vitesses et/ou le carburant restant, lesdits paramètres étant stockés pendant le vol normal suivant la trajectoire, avec un certain nombre desdits paramètres étant continuellement et/ou régulièrement stockés, sans intervention de l'équipage, depuis le décollage et jusqu'en position actuelle.

6. Le système de navigation selon la revendication 5,
**caractérisé en ce que** les paramètres comprennent
- un horodatage temporel tel que le Temps Universel Coordonné TUC, avec une précision de l'ordre de la milliseconde, telle qu'indiqué par un capteur GPS embarqué,
- une position horizontale précise de l'hélicoptère (10) : latitude, longitude, altitude, à partir du GPS, du système de navigation inertielle, d'une mesure de distance DME/DME, d'une mesure de distance VOR/DME telle que fournies par le capteur GPS ou le système de gestion de vol FMS ;
- la vitesse-sol, la vitesse propre de l'hélicoptère (10) à partir de l'utilisation de la centrale anémométrique et des données du système de gestion de vol FMS ;
- l'assiette de l'hélicoptère (10) : tangage, roulis, lacet, amplitude de tangage, de roulis, de lacet, accélération en tangage, en roulis, en lacet, accélérations structurelles à partir de l'utilisation d'un accéléromètre et/ou d'un gyromètre de l'hélicoptère (10) ;
- l'intégrité de la position, en particulier l'intégrité horizontale et l'intégrité verticale, telles qu'indiquées par le GPS ou le système de gestion de vol FMS, et
- la situation précise de l'hélicoptère (10), telle que le poids, le carburant embarqué, tels qu'indiqués par le HMS ou par le système de gestion de vol FMS

7. Le système de navigation selon la revendication 1,
**caractérisé en ce que** le système de navigation prévoit des moyens de sélection d'une section extraite de la trajectoire suivie pour le calcul du guidage.

8. Le système de navigation selon la revendication 1,
**caractérisé en ce que** lesdits moyens de calcul du guidage comprennent un indicateur de déviation transversale, un indicateur de déviation verticale, la vitesse requise et l'indication « tunnel dans le ciel » et utilisent les affichages de présentation visuelle déjà montés et/ou des affichages tête haute, le cas échéant.

9. Le système de navigation selon la revendication 1,
**caractérisé en ce que** lesdits moyens utilisés pour le stockage (11) possèdent suffisamment de mémoire pour un stockage de 4 heures au plus et sont adaptés à l'environnement de l'hélicoptère.

10. Une méthode d'exploitation d'un système de navigation d'un hélicoptère (10) selon l'une quelconque des revendications 1 à 9, comportant les étapes suivantes : pilotage de l'hélicoptère (10), détection des données relatives à la trajectoire suivie, lesdites données comprenant une position horizontale précise de l'hélicoptère : latitude, longitude, altitude,
Stockage desdites données dans des moyens de stockage embarqués (11), récupération desdites données dans lesdits moyens de stockage embarqués (11), fourniture des données de guidage en inversant lesdites données au moyen desdits moyens de calcul, calcul d'une intégrité acceptable sur la trajectoire de vol de retour à partir d'une base de données de terrain et d'obstacles, présentation desdites données inversées et pilotage de l'hélicoptère (10) selon lesdites données inversées en intégrant au moins partiellement le système de commande de vol automatique lorsque l'hélicoptère (10) est dans une phase de vol dans des conditions proches des conditions météorologiques de vol aux instruments.

11. La méthode selon la revendication 10,
**caractérisée par** la sélection d'une section extraite desdites données inversées et présentées visuellement.
